# EUROPÄISCHE PATENTSCHRIFT

(11) **EP 0 856 648 B1**
(45) Veröffentlichungstag und Bekanntmachung des Hinweises auf die Patenterteilung: **13.08.2003**
(21) Anmeldenummer: 97120914.3
(22) Anmeldetag: 28.11.1997
(51) Int. Cl.: F01N 7/18

(54) **Flexibles Leitungselement für Abgasleitungen**
Flexible pipe element for exhaust lines
Elément de conduite flexible pour conduites de gaz d'échappement

(30) Priorität: 31.01.1997 DE 29701625 U
(43) Veröffentlichungstag der Anmeldung: 05.08.1998
(73) Patentinhaber: Witzenmann GmbH, 75175 Pforzheim (DE)
(72) Erfinder: Gropp, Reinhard, 75305 Neuenbürg-Arnbach (DE); Hornung, Jörg, 76698 Ubstadt-Weiher (DE); Pluschke, Michael, 75305 Neuenbürg-Rotenbach (DE)
(74) Vertreter: Blumenröhr, Dietrich

(56) Entgegenhaltungen:
- EP-A- 0 448 769
- DE-A- 3 702 243
- DE-A- 4 202 808
- DE-C- 3 924 697

## Beschreibung

Die vorliegende Erfindung betrifft ein flexibles Leitungselement für Abgasleitungen von Verbrennungsmotoren bei Kraftfahrzeugen mit einem schraubengangförmig oder ringgewellten Balg aus Metall, mit einem koaxial zum Balg angeordneten gewickelten Metallschlauch und mit jeweils endständig am Balg und/oder Schlauch vorgesehenen koaxialen im wesentlichen zylindrischen Anschlußelementen.

Derartige flexible Leitungselemente - wie sie beispielsweise in der DE-A-39 24 697 beschrieben sind - werden in der Regel als Zwischenstück in die im übrigen weitgehend starre Abgasleitung bei Kraftfahrzeugen eingebaut, um Bewegungen und Schwingungen, wie sie insbesondere von der elastisch gelagerten Antriebsmaschine, durch Erschütterungen des Fahrzeuges, temperaturbedingte Längenänderungen etc. erzeugt werden, aufzunehmen und von der Weiterleitung an benachbarte Bauteile anzukoppeln. Somit müssen die Leitungselemente nicht nur hinsichtlich der Wärmedämmung, Schalladsorption und Abgasdichtigkeit ausreichende Eigenschaften aufweisen, sondern sich vor allem durch eine geeignete Schwingungsdämpfung auszuzeichnen.

Während der Balg zusammen mit den zumindest mittelbar hieran in der Regel durch Schweißen festgelegten Anschlußelementen für die Gasdichtigkeit des Leitungselementes sorgt, ist der gewickelte Metallschlauch für die Dämpfungseigenschaften verantwortlich. Die Bewegungsdämpfung wird bei den aus einem in der Regel vorprofilierten Metallband insbesondere unter Verfalzen benachbarter Bandkanten und Ausbilden mehrerer Falzlagen schraubengangförmig gewickelten Metallschlauch dadurch erreicht, daß die benachbarten Bandkanten bzw. Falzlagen bei einer angularen, axialen, lateralen oder torsionalen Auslenkung je nach Stärke der Wicklung bzw. Verfalzung aneinanderreiben und so die Bewegungen in Reibarbeit, die sogenannte Verlustarbeit, umsetzen.

Für eine optimale Bewegungsdämpfung ist es erforderlich, das Maß der Schlauchwicklung so abzustimmen, daß weder aufgrund einer zu lockeren Wicklung fast keine Reibung zwischen den erwähnten Schlauchkanten erzeugt wird, wodurch die erzielbare Dämpfung sehr gering ist, noch daß die Wicklung derart stark ausgeführt ist, daß der Metallschlauch aufgrund seiner Steifheit eine zu große Reibung aufweist und hierdurch fast einem starren Rohr entspricht mit entsprechend ebenfalls reduziertem Dämpfungsverhalten.

Selbst wenn man aber einen optimal ausgelgten gewickelten Metallschlauch in das flexible Leitungselement einbaut, so bestehen immer noch möglich Anwendungsfälle, in denen der Metallschlauch nicht seine vollständigen Dämpfungseigenschaften zur Entfaltung bringen kann bzw. in denen seine Dämpfungseigenschaften immer noch nicht ausreichen: Denn bei bestimmten Arbeitstemperaturen des gewickelten Metallschlauches, also Temperaturen, auf die der Schlauch über eine längere Betriebsdauer der Abgasleitung aufgezeigt wird, kann es zu einer Herabsetzung der Dämpfungseigenschaften kommen. Ein Grund hierfür liegt darin, daß insbesondere in den Biegebereichen des gewickelten Schlauches sogenannte Wärmeversteifungen auftreten, indem sich die beim Wickeln in den Schlauch induzierten unterschiedlichen Materialspannungen zu lösen versuchen und sich hierbei in verschiedenem Maße ausdehnen. Dies erzeugt eine Vergrößerung der Reibung benachbarter Bandkanten bzw. Falzlagen, was wiederum zu einer Einschränkung der Bewegungsfähigkeit des Schlauches bzw. zu einem stärkeren Verschleiß der sich berührenden Schlauchbereiche und einer demgemäß herabgesetzten Dämpfungseigenschaft führt.

Der vorliegenden Erfindung liegt hiervon ausgehend die Aufgabe zugrunde, ein flexibles Leitungselement der eingangs geschilderten Art zur Verfügung zu stellen, das sich unabhängig von den Anwendungs- und Einbaubedingungen durch eine Verbesserung der Dämpfungseigenschaften und deren Aufrechterhaltung über eine längere Betriebsdauer auszeichnet.

Diese Aufgabe ist für das vorstehend geschilderte flexible Leitungselement dadurch gelöst, daß zusätzlich zum genannten ersten gewickelten Metallschlauch koaxial ein zweiter gewickelter Metallschlauch vorgesehen ist. Dies hat den Vorteil, daß man die entsprechenden Anforderungen an das Leitungselement auf zwei Metallschläuche aufteilen kann, so daß sichergestellt ist, daß auf jeden Fall beide Metallschläuche im Sinne einer optimalen Dämpfung eine maximale Verlustarbeit erzielen können und der innere Metallschlauch beispielsweise zusätzlich zum Abbauen der Wärmeenergie dient, indem er wie ein Isolierkörper den ersten Metallschlauch und den Balg von der Abgaswärme abschirmt.

Hierbei kann der die Temperatur abbauende Metallschlauch recht locker gewickelt sein, da die von ihm zu erzeugende Verlustarbeit nur sekundär ist, wodurch er aufgrund seiner Flexibilität auch keine nachteiligen Einflüsse auf das Dämpfungsverhalten des ersten Metallschlauches ausübt, während der erste Metallschlauch entsprechend höher belastet werden kann und somit auch stärker zu wickeln ist. Das heißt, aufgrund der durch den zweiten gewickelten Metallschlauch möglichen Funktionentrennung zwischen den beiden Schläuchen kann der für die Dämpfung zuständige erste Schlauch immer in einem solchen Bereich angeordnet werden, der optimal für sein Dämpfungsverhalten ist, während der zweite Schlauch nur eine geringe Verlustarbeit zur Verfügung stellen muß und auf der anderen Seite aber für eine Abschottung des ersten Metallschlauches gegenüber solchen Bedingungen, die die Dämpfung verschlechtern, verantwortlich ist.

Es ist zwar bereits aus der DE-A-37 02 243 bekannt, bei ähnlichen flexiblen Leitungselementen koaxial zueinander zwei gewickelte Metallschläuche vorzusehen, wobei zwischen den Metallschläuchen eine Isolierlage beispielsweise aus Glasfasem zur Wärmedämmung, Schalladsorption etc. angeordnet wird. Da jedoch diesem Leitungselement der bei den Leitungselementen der vorliegenden Gattung zur Gasdichtigkeit erforderliche gewellte Metallbalg fehlt, kann in dem zweiten gewickelten Metallschlauch des Standes der Technik allenfalls eine - im vorliegenden Spezialfall mögliche - Alternative zum Balg nicht aber ein Zusatz gesehen werden. Hierbei ergeben sich eine Vielzahl von Positionierungsmöglichkeiten für die beiden Metallschläuche, wobei lediglich sicherzustellen ist, daß die beiden gewickelten Metallschläuche zumindest mittelbar an den Anschlußelementen festgelegt sind, da sich nur so die gewünschte Dämpfung zwischen Ein- und Austritt des flexiblen Leitungselementes sicherstellen läßt. Demnach erstrecken sich die beiden Metallschläuche über zumindest fast die gesamte Länge des Leitungselementes. Zwar wäre es auch möglich, nur den für die Bewegungsdämpfung verantwortlichen Metallschlauch an beiden Anschlußelementen festzulegen, während der zweite Metallschlauch die Abschirmung auch ohne direkte Anbindung an die Anschlußelemente erzeugen kann, jedoch geht hierdurch das zusätzliche von diesem lieferbare Dämpfungsverhalten verloren.

Die beiden gewickelten Metallschläuche können beispielsweise direkt ineinander und anliegend oder aber auch voneinander beispielsweise unter Zwischenfügung jeweils eines Distanzelementes an zumindest den Schlauchenden beabstandet angeordnet werden, wobei wiederum beide Schläuche sowohl innerhalb als auch außerhalb des Metallbalges positioniert sein können. Darüber hinaus kann der Balg aber auch zwischen den beiden gewickelten Schläuchen angeordnet sein.

Durch den Isoliereffekt des inneren Metallschlauches lassen sich für den zusätzlichen Metallschlauch sowie für den Balg im Hinblick auf Korrosionsfestigkeit etc. vorteilhafte Werkstoffe einsetzen, die an sich ungeeignet für den vom Abgas erzeugten Temperaturbereich sind. Die Metallschläuche lassen sich auch dadurch unempfindlicher gegenüber den Wärmeversteifungseffekten machen, indem ferritischer Stahl verwendet wird, der im Vergleich zu austenitischem Stahl einen nur halb so großen Ausdehnungskoeffizienten aufweist.

Zur Erzielung einer möglichst großen Bewegungsdämpfung empfiehlt es sich darüber hinaus, daß zumindest einer der beiden gewickelten Metallschläuche ein Agraffschlauch ist, der sich durch eine flächenmäßige Vergrößerung der Anlagebereiche zwischen benachbarten Bandlagen auszeichnet, wodurch wiederum eine größere Verlust- bzw. Reibarbeit zu erzielen ist.

Was den Querschnitt der Metallschläuche betrifft, so ist es möglich, diesen zum einen polygonal zum anderen aber auch rund auszuführen. Außerdem ist es zur Verbesserung der Dämpfungseigenschaften unabhängig von deren Form vorteilhaft, den Durchmesser der Metallschläuche möglichst groß zu wählen, diese also insbesondere auf der Balgaußenseite anzuordnen, um durch den demgemäß vergrößerten Umfang und Anlagebereich benachbarter Bandkanten/Falzlagen das Maß der Verlustarbeit zu erhöhen.

Schließlich ergibt sich noch eine Vielzahl weiterer Varianten für die Positionierung der einzelnen Komponenten im Leitungselement dadurch, daß das flexible Leitungselement zusätzlich einen Geflechtsschlauch aus Metalldrähten aufweist, der insbesondere dann zur Anwendung kommt, wenn die beiden Metallschläuche auf der Balginnenseite angeordnet sind und die Balgwellen durch den Geflechtsschlauch z. B. gegenüber der Umgebung geschützt werden können.

Durch die vorstehenden beispielhaften Aufzählungen läßt sich leicht abschätzen, daß und wie man das Leitungselement durch geeignete Wahl der Metallschlauchpositionen, -wicklungsgrade etc. immer so auslegen kann, daß eine optimale und lang anhaltende Bewegungsdämpfung erzielt wird. Hierbei muß lediglich darauf geachtet werden, daß der für die Bewegungsdämpfung verantwortliche Metallschlauch außerhalb des jeweils kritischen Temperaturbereiches angeordnet wird, welcher die erwähnten Wärmeversteifungseffekte hervorruft, wobei der andere Metallschlauch die Abschirmung von diesem bzw. dem Balg gegenüber diesen kritischen Temperaturen sicherstellt und hierbei gleichzeitig ebenfalls zu einer Vergrößerung der Bewegungsdämpfung mit herangezogen werden kann.

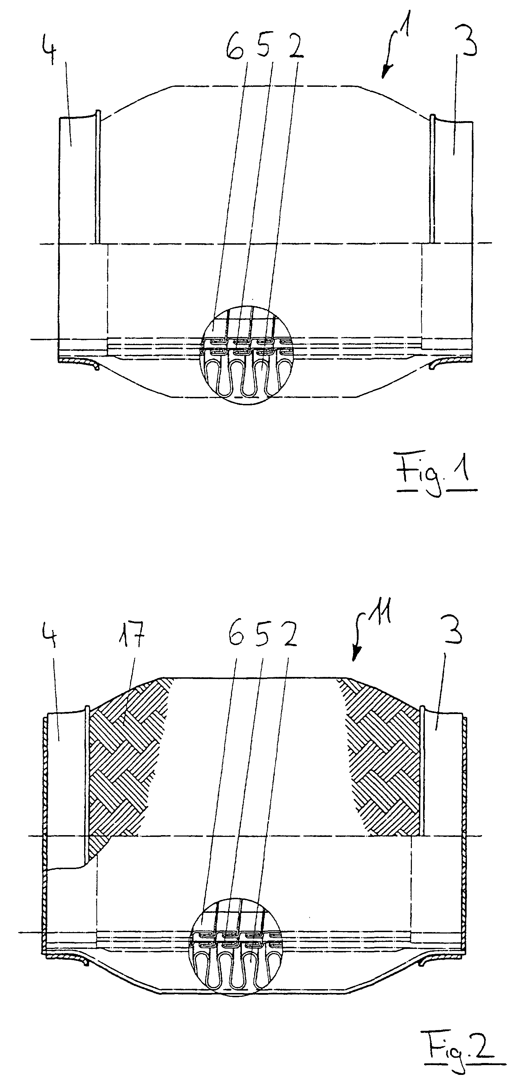

Weitere Merkmale und Vorteile der vorliegenden Erfindung ergeben sich aus der nachfolgenden Beschreibung von Ausführungsbeispielen anhand der Zeichnungen; hierbei zeigen die
- Figuren 1 bis 6: jeweils alternative Ausführungsformen eines erfindungsgemäßen flexiblen Leitungselementes für Abgasleitungen in Seitenansicht mit teilweisem Axialschnitt.

In Figur 1 ist ein flexibles Leitungselement 1 dargestellt, das aus einem schraubengangförmig oder ringgewellten Metallbalg 2 besteht, der an seinen axialen Enden jeweils zylindrische Anschlußemente 3, 4 aufweist, mit denen er gasdicht verbunden ist. Das Leitungselement 1 enthält darüber hinaus koaxial zum Balg angeordnete schraubengangförmig gewickelte Metallschläuche 5 und 6 in Form von Agraffschläuchen, die sich unter leichtem gegenseitigen Abstand zwischen den beiden Anschlußelementen 3 und 4 erstrecken und dort unter Zwischenfügung des Balgs 2 festgelegt sind. Während der Balg für die Gasdichtheit des Leitungselementes verantwortlich ist, sorgt zumindest einer der beiden gewickelten Agraffschläuche 5, 6 für ein entsprechendes Dämpfungsverhalten des flexiblen Leitungselementes.

Nimmt man an, daß der innere Agraffschlauch 6 in dem kritischen Temperaturbereich angeordnet ist, so heißt das, daß er den Agraffschlauch 5 und den Balg 2 gegenüber dieser kritischen Temperatur abschirmt und somit der Agraffschlauch 5 für das Zurverfügungstellen des größten Dämpfungsanteiles ausgelegt und herangezogen werden kann.

Figur 2 zeigt ein Leitungselement 11, das neben den bereits in Figur 1 dargestellten Komponenten, die auch mit denselben Bezugszeichen versehen sind, auf der Balgaußenseite einen Geflechtsschlauch 17 aus Metalldraht aufweist, der die Balgwellen gegenüber der Umgebung schützt. Im übrigen entsprechen sich die beiden Leitungselemente 1 und 11 einander.

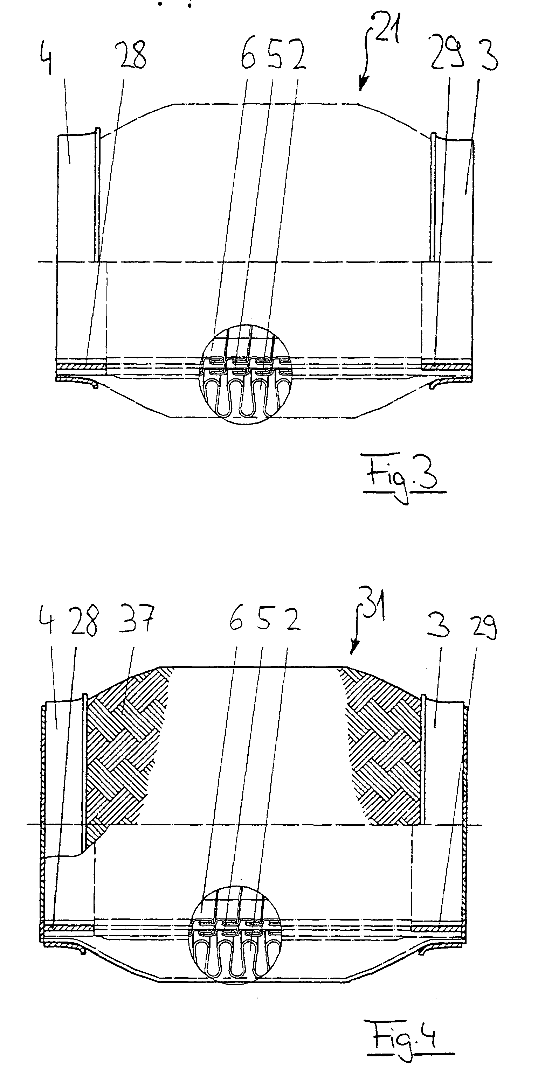

In Figur 3 ist ein flexibles Leitungselement 21 gezeigt, das aus den Komponenten des Leitungselementes 1 besteht mit dem einzigen zusätzlichen Merkmal, daß die beiden ineinander angeordneten Agraffschläuche 5 und 6 an ihren axialen Enden im Bereich der Anschlußelemente 3, 4 von jeweils einem Distanzring 28, 29 beabstandet werden. Durch diese Distanzringe läßt sich eine gegenseitige Anlage für Fälle geringer Angularbewegungen verhindern und so beispielsweise eine entsprechende, durch gegenseitige Berührungen erzeugte Geräuschentwicklung ausschließen. Ansonsten gleichen sich die Leitungselemente 21 und 1 in Aufbau und Funktion.

Das in Figur 4 dargestellte Leitungselement 31 unterscheidet sich wiederum von dem Leitungselement 21 aus Figur 3 dadurch, daß der Metallbalg 2 auf seiner Außenseite mit einem Geflechtsschlauch 37 aus Metalldrähten ähnlich dem Geflechtsschlauch 17 beim Leitungselement aus Figur 2 versehen ist.

In Figur 5 ist schließlich ein Leitungselement 41 dargestellt, das sich von den Leitungselementen aus den Figuren 1 bis 4 in stärkerem Maße unterscheidet: Das Leitungselement 41 besteht aus einem Metallbalg 42 mit zwei endständigen Anschlußelementen 43, 44 und weist auf seiner Innenseite einen gewickelten Metallschlauch 46 in Form eines Agraffschlauchs auf, der im Bereich der Anschlußelemente am Metallbalg festgelegt ist. Auf der Außenseite des Metallbalges ist ein zweiter gewickelter Metallschlauch 45 angeordnet, der sich zwischen den beiden Anschlußelementen 43 und 44 erstreckt und direkt an diesen angebunden ist. Zur Festlegung an den Anschlußelementen sind jeweils eine Endhülse 47, 48 auf der endständigen Außenseite des zweiten Metallschlauches 45 vorgesehen.

Der Metallbalg 42 ist gegenüber dem ersten gewickelten Metallschlauch 46 sowie gegenüber dem zweiten gewickelten Metallschlauch 45 beabstandet, so daß es im Bereich geringer Angularbewegungen zwischen den beiden Leitungselementen zu keiner mit einer unerwünschten Reibung und Geräuschentwicklung verbundenen gegenseitigen Anlage der einzelnen Komponenten kommt.

Bezüglich des auf der Balgaußenseite angeordneten Metallschlauches 45 sei erwähnt, daß dieser natürlich einen größeren Umfang als der Metallschlauch 46 besitzt und somit aufgrund der größeren Anlageflächen benachbarter Bandkanten bzw. Falzlagen eine bessere Dämpfungseigenschaft gewährleistet.

Die beiden Wickelschläuche weisen im Falle des Leitungselementes 41 einen Abstand auf, der der Höhe der Balgwellen etwa entspricht, wodurch sich aufgrund des zylinderförmigen Verlaufes der Wickelschläuche eine gemeinsame Anbindung im Bereich der Anschlußelemente ausschließt. Deshalb sind die Anschlußelemente 43, 44 derart abgewirkelt ausgeführt, daß sie mit dem Bereich des kleineren Querschnitts ungefähr dem Außendurchmesser des inneren Wickelschlauches 46 und mit dem Bereich größeren Querschnitts ungefähr dem Innendurchmesser des äußeren Wickelschlauches 45 angepaßt sind, wodurch sich eine die Übertragung von Bewegungen gewährleistende Verbindung zwischen Anschlußelementen und Wickelschläuchen erzielen läßt.

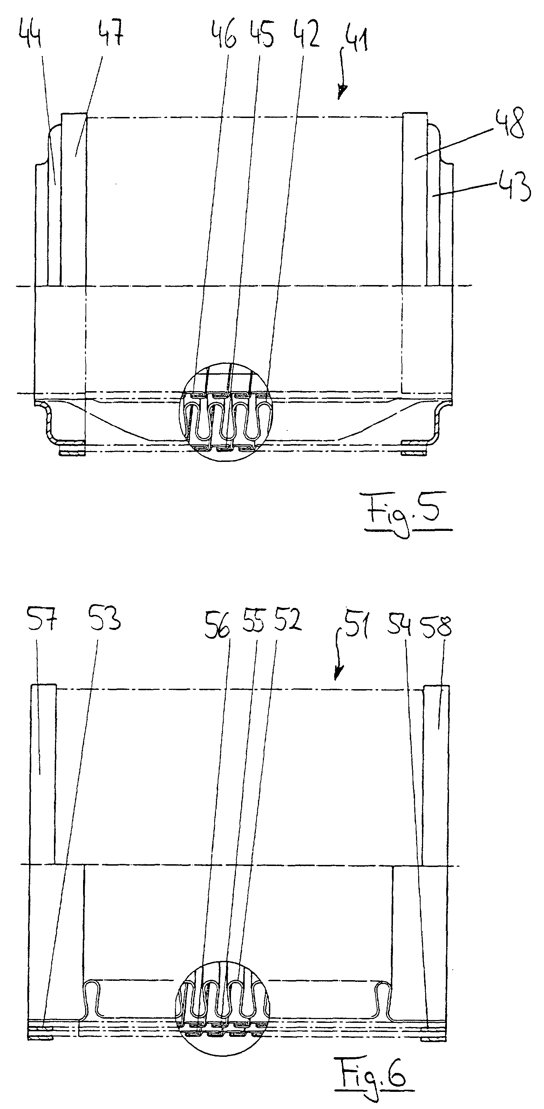

Figur 6 zeigt schließlich ein Leitungselement 51, das sich den Effekt der größeren Dämpfung aufgrund eines größeren Wickelschlauchumfanges dahingehend zunutze macht, daß beide Wickelschläuche 55, 56 auf der Außenseite eines Balgs 52 angeordnet sind. Hierdurch ist der Balg 52 auf seiner Innenseite direkt dem Abgas und dessen Temperaturen ausgesetzt, wodurch sich diese Bauform nur für solche Motoren bzw. für solche Positionen in der Abgasleitung empfiehlt, in denen die Temperaturen des Abgases unkritisch für die Funktion des Metallbalges 52 sind.

Waren bei den Leitungselementen aus den Figuren 1 bis 5 die Anschlußelemente jeweils mit den Balgenden auf dem Niveau ihrer Innendurchmesser verbunden, so ist der Metallbalg 52 der Figur 6 im Querschnittsbereich seiner Außenwellen endständig am gewickelten Schlauch 55 festgelegt. Die Anschlußelemente 53, 54 befinden sich erst auf der Außenseite des Wickelschlauches 55, so daß die Verbindung zwischen Balg und Anschlußelementen im hier vorliegenden Fall nur mittelbar unter Zwischenschaltung des Wickelschlauches 55 erfolgt.

Auf der Außenseite der Anschlußelemente 53, 54, die somit als Distanzelemente ähnlich denjenigen aus Figur 3, 4 fungieren, ist der zweite Wickelschlauch 56 festgelegt, der sich beabstandet durch diese Anschlußelemente vom ersten Wickelschlauch koaxial zu diesem erstreckt. Wiederum auf der Außenseite des Wickelschlauches 56 sind zwei Endhülsen 57, 58 vorgesehen, die zur Verschweißung des äußersten Wickelschlauches mit den Anschlußelementen ähnlich den Endhülsen 47, 48 aus Figur 5 dienen.

Zusammenfassend ergibt sich durch die vorliegende Erfindung der Vorteil, daß aufgrund des zweiten, zusätzlich zum ersten gewickelten Metallschlauch vorgesehenen Metallschlauches eine Funktionentrennung möglich ist, durch die sichergestellt werden kann, daß immer ein Metallschlauch für eine Abschirmung des anderen Metallschlauches und/oder des Balges gegenüber kritischen Abgastemperaturen sorgen kann, so daß sich der abgeschirmte Metallschlauch zur Erzielung optimaler Dämpfungseigenschaften auslegen läßt.

## Patentansprüche

1. Flexibles Leitungselement für Abgasleitungen von Verbrennungsmotoren bei Kraftfahrzeugen mit einem schraubengangförmig oder ringgewellten Balg (2, 42, 52) aus Metall, mit einem koaxial zum Balg angeordneten gewickelten Metallschlauch (5, 45, 55) und mit jeweils endständig am Balg und/oder Schlauch vorgesehenen ebenfalls hierzu koaxial angeordneten, im wesentlichen zylindrischen Anschlußelementen (3, 4, 43, 44, 53, 54),
**dadurch gekennzeichnet,**
**daß** zusätzlich zum genannten ersten gewickelten Metallschlauch (5, 45, 55) koaxial ein zweiter gewickelter Metallschlauch (6, 46, 56) vorgesehen ist.

2. Flexibles Leitungselement gemäß Anspruch 1,
**dadurch gekennzeichnet,**
**daß** beide gewickelten Metallschläuche (5, 6, 45, 46, 55, 56) zumindest mittelbar an den Anschlußelementen (3, 4, 43, 44, 53, 54) festgelegt sind.

3. Flexibles Leitungselement nach zumindest einem der vorstehenden Ansprüche,
**dadurch gekennzeichnet,**
**daß** zwischen den beiden gewickelten Metallschläuchen (5, 6, 55, 56) jeweils wenigstens endständig ein Distanzelement (28, 29, 53, 54) angeordnet ist.

4. Flexibles Leitungselement nach Anspruch 1,
**dadurch gekennzeichnet,**
**daß** der Balg (42) zwischen den beiden gewickelten Metallschläuchen (45, 46) angeordnet ist.

5. Flexibles Leitungselement nach zumindest einem der vorstehenden Ansprüche,
**dadurch gekennzeichnet,**
**daß** die beiden gewickelten Metallschläuche (5, 6) innerhalb des Balges (2) angeordnet sind.

6. Flexibles Leitungselement nach Anspruch, 1 oder 2,
**dadurch gekennzeichnet,**
**daß** die beiden gewickelten Metallschläuche (55, 56) außerhalb des Balges (52) angeordnet sind.

7. Flexibles Leitungselement nach zumindest einem der vorstehenden Ansprüche,
**dadurch gekennzeichnet,**
**daß** zumindest einer der beiden gewickelten Metallschläuche (5, 6, 45, 46, 55, 56) aus ferritischem Stahl besteht.

8. Flexibles Leitungselement nach zumindest einem der vorstehenden Ansprüche,
**dadurch gekennzeichnet,**
**daß** zumindest einer der beiden gewickelten Metallschläuche (5, 6, 45, 46, 55, 56) ein Agraffschlauch ist.

9. Flexibles Leitungselement nach zumindest einem der vorstehenden Ansprüche,
**dadurch gekennzeichnet,**
**daß** beide gewickelten Metallschläuche (5, 6, 45, 46, 55, 56) unterschiedlich stark gewickelt sind.

10. Flexibles Leitungselement nach zumindest einem der vorstehenden Ansprüche,
**dadurch gekennzeichnet,**
**daß** zumindest einer der beiden gewickelten Metallschläuche (5, 6, 45, 46, 55, 56) einen polygonalen Querschnitt aufweist.

11. Flexibles Leitungselement nach zumindest einem der vorstehenden Ansprüche,
**dadurch gekennzeichnet,**
**daß** zumindest einer der beiden gewickelten Metallschläuche (5, 6, 45, 46, 55, 56) einen runden Querschnitt aufweist.

12. Flexibles Leitungselement nach zumindest einem der vorstehenden Ansprüche,
**dadurch gekennzeichnet,**
**daß** das flexible Leitungselement (11, 31) auf seiner Außenseite einen Geflechtsschlauch (17, 37) aus Metalldrähten aufweist.

## Claims

1. Flexible pipe element for exhaust gas ducts of combustion engines in motor vehicles including a helical or annularly corrugated bellows (2, 42, 52) of metal, a wound metal hose (5, 45, 55), which is disposed coaxially with the bellows, and substantially cylindrical connecting elements (3, 4, 43, 44, 53, 54) which are provided at the end of the bellows and/or hose and are also disposed coaxially therewith, **characterised in that** in addition to the said first wound metallic hose (5, 45, 55), a second wound metallic hose (6, 46, 56) is coaxially provided.

2. Flexible pipe element as claimed in Claim 1, **characterised in that** the two wound metal hoses (5, 6, 45, 46, 55, 56) are fixed at least indirectly to the connecting elements (3, 4, 43, 44, 53, 54).

3. Flexible pipe element as claimed in at least one of the preceding claims, **characterised in that** a spacer element (28, 29, 53, 54) is disposed, at least at the ends, between the two wound metal hoses (5, 6, 55, 56).

4. Flexible pipe element as claimed in Claim 1, **characterised in that** the bellows (42) is disposed between the two wound metal hoses (45, 46).

5. Flexible pipe element as claimed in at least one of the preceding claims, **characterised in that** the two wound metal hoses (5, 6) are disposed within the bellows (2).

6. Flexible pipe element as claimed in Claim 1 or 2, **characterised in that** the two wound metal hoses (55, 56) are disposed outside the bellows (52).

7. Flexible pipe element as claimed in at least one of the preceding claims, **characterised in that** at least one of the two wound metal hoses (5, 6, 45, 46, 55, 56) comprises ferritic steel.

8. Flexible pipe element as claimed in at least one of the preceding claims, **characterised in that** at least one of the two wound metal hoses (5, 6, 45, 46, 55, 56) is a strip-wound hose with an interlocked profile.

9. Flexible pipe element as claimed in at least one of the preceding claims, **characterised in that** the two wound metal hoses (5, 6, 45, 46, 55, 56) are wound with a different tightness.

10. Flexible pipe element as claimed in at least one of the preceding claims, **characterised in that** at least one of the two wound metal hoses (5, 6, 45, 46, 55, 56) has a polygonal cross-section.

11. Flexible pipe element as claimed in at least one of the preceding claims, **characterised in that** at least one of the two wound metal hoses (5, 6, 45, 46, 55, 56) has a round cross-section.

12. Flexible pipe element as claimed in at least one of the preceding claims, **characterised in that** the flexible pipe element (11, 31) has a mesh hose (17, 37) comprising metal wires on its outer surface.

## Revendications

1. Elément de conduite flexible pour conduites de gaz d'échappement de moteurs à combustion de véhicules à moteurs, avec un soufflet métallique de forme hélicoïdale ou ondulée (2, 42, 52), avec un tuyau métallique enroulé (5, 45, 55) disposé coaxialement au soufflet, et avec des éléments de raccordement sensiblement cylindriques (3, 4, 43, 44, 53, 54) prévus respectivement en position d'extrémité au niveau du soufflet et/ou du tuyau et disposés également coaxialement à ceux-ci, **caractérisé en ce que**, outre le premier tuyau métallique enroulé cité (5, 45, 55), un second tuyau métallique enroulé (6, 46, 56) est prévu coaxialement.

2. Elément de conduite flexible selon la revendication 1, **caractérisé en ce que** les deux tuyaux métalliques enroulés (5, 6, 45, 46, 55, 56) sont fixés au moins indirectement aux éléments de raccordement (3, 4, 43, 44, 53, 54).

3. Elément de conduite flexible selon au moins l'une des revendications précédentes, **caractérisé en ce qu'**un élément d'écartement (28, 29, 53, 54) est prévu entre les deux tuyaux métalliques enroulés (5, 6, 55, 56) respectivement au moins en position d'extrémité.

4. Elément de conduite flexible selon la revendication 1, **caractérisé en ce que** le soufflet (42) est disposé entre les deux tuyaux métalliques enroulés (45, 46).

5. Elément de conduite flexible selon au moins l'une des revendications précédentes, **caractérisé en ce que** les deux tuyaux métalliques enroulés (5, 6) sont disposés à l'intérieur du soufflet (2).

6. Elément de conduite flexible selon la revendication 1 ou 2, **caractérisé en ce que** les deux tuyaux métalliques enroulés (55, 56) sont disposés à l'extérieur du soufflet (52).

7. Elément de conduite flexible selon au moins l'une des revendications précédentes, **caractérisé en ce qu'**au moins l'un des deux tuyaux métalliques enroulés (5, 6, 45, 46, 55, 56) est en acier ferritique.

8. Elément de conduite flexible selon au moins l'une des revendications précédentes, **caractérisé en ce qu'**au moins l'un des deux tuyaux métalliques enroulés (5, 6, 45, 46, 55, 56) est un tuyau à agrafe.

9. Elément de conduite flexible selon au moins Tune des revendications précédentes, **caractérisé en ce que** les deux tuyaux métalliques enroulés (5, 6, 45, 46, 55, 56) présentent des enroulements dont les degrés de sewage diffèrent l'un de l'autre.

10. Elément de conduite flexible selon au moins Tune des revendications précédentes, **caractérisé en ce qu'**au moins l'un des deux tuyaux métalliques enroulés (5, 6, 45, 46, 55, 56) présente une section transversale polygonale.

11. Elément de conduite flexible selon au moins rune des revendications précédentes, **caractérisé en ce qu'**au moins l'un des deux tuyaux métalliques enroulés (5, 6, 45, 46, 55, 56) présente une section transversale ronde.

12. Elément de conduite flexible selon au moins Tune des revendications précédentes, **caractérisé en ce que** l'élément de conduite flexible (11, 31) comporte sur son côté extérieur une gaine tressée en fits métalliques (17, 37).
